# DEMANDE DE BREVET EUROPEEN

(11) **EP 2 068 274 A1**
(43) Date de publication de la demande: **10.06.2009**
(21) Numéro de dépôt: 07301619.8
(22) Date de dépôt: 03.12.2007
(51) Int. Cl.: G06K 19/077

(54) **Système à double circuit intégré et utilisation du système à la mise en oeuvre d'application à distance**

(71) Demandeur: GEMPLUS, 13420 Gémenos (FR); Axalto S.A., 92190 Meudon (FR)
(72) Inventeur: Thill, Michel, 78340 Les Clayes sous Bois (FR); Leibenguth, Joseph, 92210 Saint-Cloud (FR); Fidalgo, Jean-Christophe, 13420 Géménos (FR)

(57) **Abrégé**

L'invention concerne un système à double circuit intégré pour terminal de communication, ledit système comprenant :
- une carte à puce de circuit intégré comprenant un support (20),
- un premier circuit intégré (µP1) dans le support et une première interface de communication du circuit intégré (24), ledit premier circuit étant adapté pour communiquer avec l'appareil;
- un second circuit intégré (µP2) portable comportant une troisième interface de communication (48, 49, 51) / d'interconnexion (28);

Le système se distingue en ce que le premier circuit intégré comporte une seconde interface de communication (40, 55) / d'interconnexion (30) couplée / en contact avec ladite troisième interface (48, 49, 51, 28) du second circuit intégré portable.

L'invention concerne également une carte à puce, un procédé et utilisation du système pour mettre en oeuvre une application quelconque via une communication.

## Description

La présente invention concerne un système à double circuit intégré pour appareil de communication. Elle concerne également une utilisation du système pour la mise en oeuvre d'une application ou transaction via une communication du terminal avec un serveur distant ou borne distante.

En particulier, la communication est établie à l'aide d'un terminal de communication et d'une carte à puce, l'application étant contenue dans un second circuit intégré additionnel d'un objet portable.

Plus particulièrement, l'invention vise un module ou une carte d'identité d'abonné (SIM) apte à mettre en oeuvre une application notamment bancaire à distance. Toutefois, le domaine de l'invention peut également concerner le transport, la télévision mobile payante, des services fournisseurs de contenu numérique et toute application ou transaction susceptible d'être mise en oeuvre à distance, voire localement grâce à l'objet portable.

L'invention prévoit d'offrir une liberté complète à l'utilisateur dans le choix de l'opérateur de télécommunication indépendamment de l'entité de banque. Elle prévoit aussi pour la banque, la possibilité de garantir et d'être responsable du paiement sécurisé tandis que l'opérateur de télécommunication mobile n'est responsable que du service de communication et de raccordement à un serveur de banque. Le cas échéant, l'invention permet d'influer sur l'importance relative des cartes ou modules dans l'appareil pour un fonctionnement avec l'un ou l'autre en toute indépendance.

Parmi les solutions de paiement sécurisé à distance, on connait une solution qui utilise des appareils téléphoniques mobiles à double fente, une fente étant consacré à une carte SIM (ISO ou au format Plug-in IUCC) et la deuxième étant consacrée à une carte bancaire ISO. Pour n'importe quel paiement sécurisé, l'appareil pouvait se relier au serveur de banque et la carte bancaire vue par le serveur par le canal ouvert par la carte de SIM, exécutait la transaction bancaire standard.

Cette solution a l'inconvénient de nécessiter une modification du parc d'appareils mobiles et d'être encombrante eu égard une tendance de miniaturisation des terminaux ou appareils de communication.

Une autre solution a consisté à inclure des applications bancaires à l'intérieur de la carte SIM. Cette solution exige des accords entre les opérateurs de banques et de télécommunication et soulève en général des inquiétudes de sécurité pour les banques. En outre, elle n'est également pas complètement interopérable et exige aussi de multiples accords entre diverses banques et de divers opérateurs pour avoir un contrôle mixte de structures de personnalisation, ce qui réduit d'autant la flexibilité de fabrication.

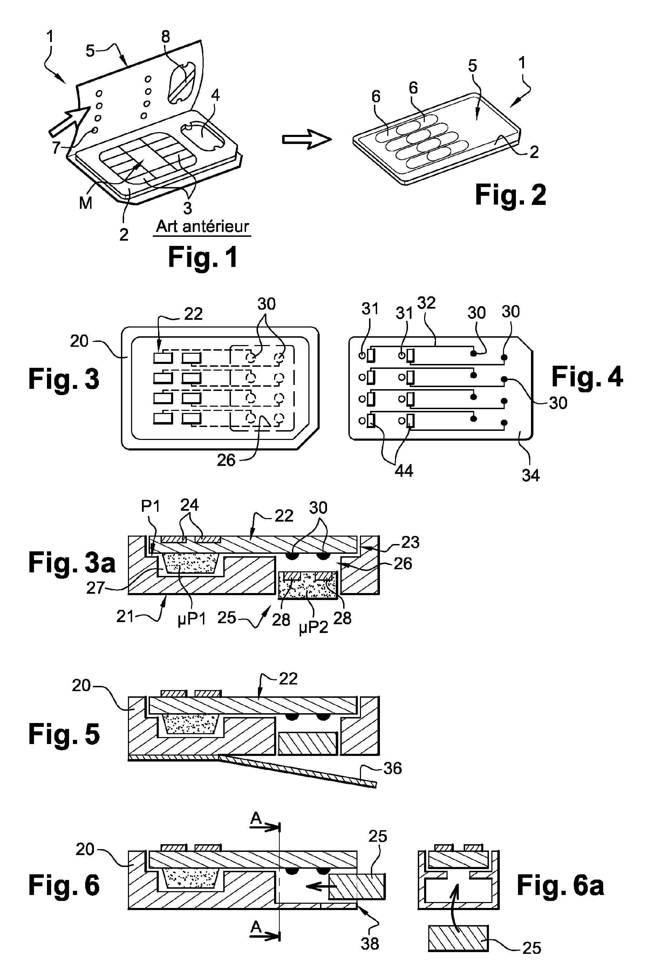

Ces problèmes ont été résolus en partie par un système à double module de circuit intégré pour appareil de communication de l'art antérieur illustré aux figures 1 et 2.

Le système 1 comprend un support 2, un premier module M dans le support, ledit module comportant un premier circuit intégré (IC) et une première interface de communication 3 du circuit intégré. Le support comprend une cavité 4 de réception d'une partie 8 en excroissance d'un objet portable 5 à circuit intégré.

Cet objet a sensiblement la même surface que le support et comprend une face verso destinée à venir contre la face du support portant ici des plages de contact 3 comme première interface de communication et une face opposée recto. La face recto porte des secondes plages 6 de contact ISO et la face verso porte des plots 7 de connexion aux premières plages de contact 3 ainsi qu'un circuit intégré en excroissance. L'objet étant en position, les plots contactent les plages de contact tandis que l'excroissance logée dans la cavité positionne l'ensemble.

Cette solution a l'inconvénient de ne pas conserver une épaisseur standard de l'ensemble en l'occurrence ISO si la carte inférieure est ISO en épaisseur comme les cartes SIM. Inversement, si la carte inférieure a une épaisseur inférieure à l'épaisseur standard, alors elle n'est pas conforme pour fonctionner seule sans l'objet portable dans les connecteurs de téléphone et des risques de mauvais contacts électriques avec le connecteur du terminal peuvent se poser.

Ce système nécessite deux connecteurs ISO identiques sur chaque objet et la connectique n'est pas optimale sur le plan de la sécurité puisque les échanges entre les deux objets transitent nécessairement par les contacts supérieurs manifestement connectés en parallèle à l'appareil de téléphonie mobile.

En outre, les contacts ohmiques entre la carte SIM et le terminal risquent d'être peu fiables du fait d'une superposition de plusieurs contacts, les plots de la carte additionnelle étant placés au milieu. Les connecteurs ISO de la SIM sont en quelque sorte encombrés par des connecteurs de la carte additionnelle. A cela peut s'ajouter des problèmes de positionnement entre les deux éléments.

L'invention a pour objectif de concevoir une configuration du système ci-dessus qui ne présente pas les inconvénients susvisés ou du moins sont atténués.

L'invention réside dans une conception (fonction, agencement, connexions) de la carte à puce et de l'objet portable additionnel associé, qui évite le plus possible d'avoir des modifications structurelles et/ou électriques de la carte à puce tout en apportant plus de sécurité.

L'invention dans son principe présente deux configurations préférées:
- Une configuration à contacts électriques selon laquelle, outre une configuration usuelle de carte SIM, la carte spécifique mini-SIM (plug-in UICC) selon l'invention, dispose d'une deuxième interface électronique disponible (comprenant un port I/O); La carte est de préférence équipée d'une part d'une zone ou cavité pour recevoir un module applicatif notamment bancaire (circuit intégré et ses plages d'interconnexion), d'autre part de moyens de connexion entre la deuxième interface de la SIM et les plages d'interconnexion du module applicatif;
- Une configuration sans-contact selon laquelle outre une configuration usuelle de carte SIM ou module SIM, la carte SIM spécifique selon l'invention dispose d'une interface électronique de communication supplémentaire spécifique de type sans-contact; et une antenne reliée à l'interface peut établir une communication radiofréquence avec un module sans-contact applicatif.

L'invention a d'abord pour objet un système à double circuit intégré pour terminal, ledit système comprenant :
- une carte à puce de circuit intégré comprenant un support,
- un premier circuit intégré (IC) dans le support et une première interface de communication du circuit intégré, ledit premier circuit étant adapté pour communiquer avec l'appareil;
- un second circuit intégré portable comportant une troisième interface de communication / d'interconnexion;
Le système est caractérisé en ce que le premier circuit intégré comporte une seconde interface de communication / d'interconnexion couplée / en contact avec ladite troisième interface du second circuit intégré portable.

Selon d'autres caractéristiques, le système peut comprendre:
- une cavité aux dimensions d'un objet portable comprenant le second circuit intégré, le second objet portable étant compris dedans avec son interface;
- la seconde interface de communication comprend des contacts électriques débouchant dans la cavité et reliés au premier circuit intégré par des pistes d'interconnexion;
- la seconde interface de communication comprend une antenne radiofréquence.

Grâce aux dispositions ci-dessus, les plages de contact de la carte d'accès (SIM) sont maintenues libres pour connecter directement le terminal sans ajout de résistance ohmique de contact ou de risque de défaut de contact électrique notamment par pollution et sans encombrement des connecteurs de la SIM.

La cavité permet de conserver la structure externe notamment son épaisseur d'une carte standard et les risques de contact électriques visés précédemment sont éliminés quand la carte est utilisée seule.

L'invention a également pour objet une carte à puce de circuit intégré pour appareil de communication, ladite carte comprenant un premier circuit intégré (IC) comportant une première interface de communication/interconnexion, ledit premier circuit étant adapté pour communiquer avec l'appareil. La carte est caractérisée en ce que ledit premier circuit intégré (µP1) comporte une seconde interface de communication / interconnexion (30, 40, 55) apte à être couplée / en contact avec un second circuit intégré portable.

Selon d'autres caractéristiques, la carte comprend:
- une cavité destinée à recevoir ledit second circuit intégré.
- constitue une carte d'identification d'abonné avec un format standard.

L'invention a également pour objet un adaptateur ayant un format carte, pour appareil de communication, ledit adaptateur comportant un corps support, caractérisé en ce que ledit corps-support est apte à rassembler, à l'intérieur du format, deux circuits intégrés respectivement premier µP1 et second µP2, l'un au moins étant portable et/ou amovible.

De préférence, les deux circuits intégrés sont aptes à communiquer ensemble et/ou avec l'appareil de communication.

L'invention a également pour objet une utilisation du système ci-dessus pour mettre en oeuvre une application dans un terminal, l'application étant contenue au moins en partie dans un second circuit intégré µP2.

L'invention a également pour objet un procédé pour mettre en oeuvre une application via une communication établie par un terminal à l'aide d'une carte d'identification d'abonné, l'application étant contenue dans un circuit intégré additionnel;
Le procédé est caractérisé en ce qu'il prévoit d'équiper la carte à puce de seconds moyens d'interconnexion ou de couplage avec ledit circuit additionnel,
et on met en oeuvre l'application en établissant un contact ou couplage entre la carte à puce et le circuit intégré additionnel à l'aide de ces seconds moyens.

D'autres particularités et avantages de l'invention apparaîtront à la lecture de la description, qui suit, donnée à titre d'exemple illustratif et non limitatif, et faite en référence aux figures annexées pour lesquelles :
- la figure 1 et 2 illustrent un système de l'art antérieur;
- les figures 3, 3a, 4 illustrent schématiquement un système de l'invention comportant une carte et selon un premier mode de réalisation;
- la figure 5 illustre le système des figures précédentes avec des moyens de fermeture d'une cavité;
- les figures 6, 6a illustrent le système des figures précédentes avec d'autres moyens différents de fermeture d'une cavité différente;
- la figure 7 illustre le système de la figure 6 en vue de dessus sans le film diélectrique ou module;
- la figure 8 illustre schématiquement un système de l'invention comportant une carte à puce fonctionnant selon un second mode de réalisation sans-contact;
- la figure 9 illustre une vue partielle de dessous du module 22 de la figure 8;
- les figures 10 et 11 illustrent des variantes de réalisation de l'objet portable additionnel de type sans contact;
- les figures 12 et 13 illustrent schématiquement deux variantes de couplage radiofréquence de deux circuit intégrés;
- les figures 14, 15 illustrent des vues correspondantes d'un mode de réalisation d'une carte avec le principe de couplage de la figure 12 ;
- la figure 16 illustre une vue en coupe d'un mode de réalisation d'une carte avec le principe de couplage de la figure 13.

Les figures 2, 3 et 4 illustrent un système à circuit intégré pour appareil de communication conforme à un premier mode de réalisation de l'invention. Chaque circuit intégré peut être conditionné sous une forme quelconque telle que celle d'un module, d'une carte. Le système, dans l'exemple préféré, comprend en fait une carte à puce (20, 22) de circuit intégré (circuit µP1 dit premier) qui est associée ou comprend un autre circuit intégré µP2 que l'on a qualifié ou appelé dans la description qui suit comme second circuit intégré, circuit additionnel ou objet portable 25 du fait qu'il est indépendant physiquement de la carte, c'est-à-dire en étant amovible. Quel que soit le mode de réalisation à contact ou non, les circuits µP1, µP2 sont relatifs respectivement au premier et second circuit.

Le système ou la carte comprend un support ou plus exactement un corps-support 20 de carte et un premier module 22 dans le corps-support; le module 22 comporte un premier circuit intégré (µP1), protégé le cas échéant par une résine de protection, et une première interface de communication 24 reliée au circuit intégré (µP1).

L'interface est du type à contact électrique avec des plages de contact au format ISO 7816 de manière à communiquer avec un appareil de communication lecteur de carte à puce. En l'occurrence, l'appareil est un téléphone portable.

Le corps-support présente plusieurs faces et une zone de réception du second circuit intégré. Cette zone est matérialisée par la suite par une cavité. Le support dans l'exemple est un corps-support au format standard d'une carte à puce. Il s'agit ici d'une carte d'identification d'abonné SIM de type plug-in UICC au format 15mm x 25mm x 0,76mm, avec un détrompeur de 3mm par 3mm

Le corps support pourrait toutefois être au format: 54mm x 85mm x 0,76mm relatif à la norme ISO 7816 des cartes à puce au tout autre format. Par carte à puce on désigne de préférence une carte à puce selon le sens ISO mais toute carte ou dispositif à un ou plusieurs circuit(s) intégré(s) est visé.

Le corps support peut avoir en particulier un format standard choisi parmi celui des mémoires flash de type SD, Mini SD, Micro SD, ou tout type de carte multimédia MMC ou de carte de type Memory Stick.

Des cartes mini-UICC dites également "plug 3G" avec un format normalisé de 15mm X 12mm X 0,76 mm avec également un détrompeur de 2, 5mm par 2,5mm, sur un coin du support de la carte, pourraient constituer un objet portable additionnel.

Selon une caractéristique de ce mode de réalisation, le premier circuit est adapté pour permettre l'accès à un service de communication via ledit appareil. Dans l'exemple, le circuit intégré µP1 comporte un microprocesseur et est apte à réaliser toutes les fonctions normales d'une carte SIM/USIM standard, en particulier, des commandes proactives.

D'autre part, selon une caractéristique, le premier circuit intégré (µP1) comporte une seconde interface de communication / interconnexion 30, 40, 55 apte à être couplée / en contact avec un second circuit intégré portable.

Les premier et second circuits intégrés sont donc adaptés pour communiquer ensemble. Ils peuvent tout deux notamment comporter à cet effet, outre des moyens de connexion / communication appropriés comprenant notamment une interface électronique transformant les signaux reçus et émis, un programme de communication, un jeu de commandes en mémoire et mettre en oeuvre entre eux un protocole de communication.

Le fonctionnement entre peut être de type maître/esclave.

Selon une variante de réalisation, les échanges entre les circuits peuvent s'effectuer via le terminal de télécommunication et les moyens logiciels peuvent être du type connu tels que ceux décrits dans le brevet EP1032925. Des commandes proactives peuvent être aussi utilisées par la SIM pour piloter le terminal de manière à dialoguer avec la puce applicative.

Dans une autre variante préférée, la première puce peut dialoguer directement avec la seconde puce via un second port de la première puce.

Enfin, selon une troisième variante qui est sensiblement le cumul des deux premières, les deux puces sont à la fois en communication directe avec le terminal et sont aptes également à dialoguer avec lui notamment avec des commandes proactives mais elles sont aptes aussi à dialoguer entre elles directement sans passer par le terminal.

Ainsi des informations peuvent être échangées par les puces entre elles avec plus de sécurité; d'autre part, les échanges entre la puce applicative et le terminal ou le réseau peuvent être plus rapides. A cet effet, des moyens de sélection logique ou de protocole du récepteur d'information (puce, terminal) peuvent être prévus dans l'une ou l'autre puce. Des informations d'une puce peuvent transiter ou non selon le cas, par l'autre puce associée et/ou le terminal. Par exemple, la puce applicative peut faire traiter une information (charger, vérifier ou chiffrer, signer, un certificat) au préalable par l'autre puce, notamment SIM ou le terminal. L'information traitée peut être retournée directement à la puce applicative ou au terminal pour la transmettre via le canal établi.

En outre, lorsque la puce SIM assure une fonction de lecteur transparent notamment ISO, l'invention a l'avantage d'utiliser le module applicatif, notamment bancaire, sans aucune modification de protocole ou de logiciel.

Plusieurs possibilités connues de communication entre les deux puces et le terminal peuvent être envisagés comme décrites dans le brevet FR2794547 en étant directement dérivées de l'application des commandes standardisées SIM Toolkit.

Dans une variante de réalisation dans laquelle les plots 30 sont connectés en parallèle avec les plages de contact 24, il suffit de raccorder les plages de raccordement 44 situées au verso 34 du film 22 aux plages de contact 24 à travers les perforations 31 avec de la matière conductrice.
Certaines connexions comme l'alimentation et la masse peuvent être prises en parallèle en permanence et être prévues à l'avance dans le double-face 22 par des vias conducteurs à travers le film. Toutefois, certaines plages 44 peuvent être directement et exclusivement reliées directement au circuit intégré par l'intermédiaire notamment un second port I/02 de la puce de circuit intégré µP1.

Conformément à des caractéristiques de cette variante du système, le support comporte des moyens de réception et/ou une zone de réception d'un dispositif ou objet électronique portable 25 à circuit intégré µP2; Ces moyens comportent ici une cavité 26 de réception aux dimensions au moins égales à celles de l'objet portable de manière à pouvoir le recevoir. Le cas échéant, la cavité peut être réduite aux dimensions minimales d'une puce de circuit intégré brute de découpage d'une galette de circuit intégré.

Le cas échéant, le second circuit intégré additionnel peut comporter des mémoires avec ou sans microprocesseur, les fonctions étant câblées. Il peut se comporter aussi comme une mémoire de masse notamment de type flash. Il peut comprendre aussi un microprocesseur avec ou sans mémoire(s). Le format de la carte additionnelle peut être par exemple une carte flash de type micro SD ou mini SD.

L'objet portable 25 est distinct et indépendant de la carte SIM 20. Il comporte un module de circuit intégré et/ou une puce de circuit intégré µP2 et une interface de communication apte à communiquer avec le circuit intégré µP1. Dans l'exemple, l'interface comprend des plages de contact électriques 28 disposés dans un module ou conditionnement approprié d'une puce électronique, tel un enrobage ou surmoulage. Ces plages sont configurées de manière à venir connecter les plots d'interconnexion 30 du film 22.

Selon une caractéristique, le système ou premier circuit intégré comporte une seconde interface de communication / interconnexion avec ledit second module de circuit. Dans l'exemple, la carte mini-SIM qui comporte une seconde interface de communication destinée à relier ensemble le premier µP1 et second circuit intégré µP2.

Pour une connexion à l'objet portable, la seconde interface de communication comprend des contacts électriques d'interconnexion 30 qui débouchent dans la cavité 26 réalisée dans le support; les contacts 30 sont reliés au premier circuit intégré par des pistes d'interconnexion 32 (fig. 4). Les contacts 30 peuvent être protubérants et/ou élastiques en étant par exemple des lames élastiques ou de la matière conductrice de préférence élastique.

Selon un mode de réalisation, des pistes 32 relient les contacts d'interconnexion 30 aux plages de contacts 24. Le circuit µP1 comporte une interface de communication dédoublée au niveau de ses plages de contact électrique 24.

Dans un mode de réalisation préféré, des plots 30 ne contactent pas directement des plages de contact 24 mais relient directement une seconde entrée /sortie I/O2 du circuit intégré µP1. Dans ce mode, le circuit µP2 dialogue avec le terminal qu'à travers le circuit µP1. Ainsi, ce système permet des échanges de données entre circuits intégrés µP1/µP2 sans passer par l'interface ISO 24 ni le terminal auquel est connectée la carte mini-SIM. Cela permet plus de sécurité vis à vis de l'extérieur de la carte, notamment le terminal.

Selon un mode de fonctionnement préféré, les moyens de communication sont adaptés de manière à ce que la carte SIM intervienne comme une passerelle entre le serveur d'application et le deuxième objet contenant l'application notamment bancaire.

Ainsi, par exemple, un serveur contenant l'application bancaire communique une commande et/ou des données via un serveur de l'opérateur à la carte SIM (via par exemple des messages de type SMS ou HTPP pour de nouvelles générations de cartes); la carte SIM reçoit et décode un message ou requête contenant des commandes APDU encapsulés et reconnaît que cette requête est adressée à la carte additionnelle; la carte SIM renvoie alors l'APDU reçue vers l'objet bancaire et la réponse de retour est véhiculée de la même façon.

Cela signifie dans cet exemple que la carte SIM se comporte comme un aiguilleur de messages et possède des fonctionnalités équivalentes à celles d'un lecteur transparent ISO.

Dans ce mode de fonctionnement préféré, la carte SIM et le serveur de l'opérateur ne font office que de système de routage des messages, et n'ont pas d'influence sur le fonctionnement de l'application. D'autre part, le code PIN de l'application bancaire sera véhiculé sur écran/clavier du terminal mobile. A cet effet, la puce de la SIM peut comporter de préférence des moyens logiciels permettant de la faire fonctionner comme un lecteur ISO transparent de la carte additionnelle avec des connexions entre puce de type ISO. La puce de la SIM est apte de préférence, à transmettre des messages au terminal pour demander d'afficher un message demandant l'introduction d'un PIN sur le clavier du terminal puis le véhiculer dans la carte bancaire pour ratification.

Dans d'autre cas, les deux circuits intégrés peuvent comprendre des moyens électroniques et logiciels permettant une communication selon un protocole de type I2C (Inter-Integrated circuit) ou SWP (single wireless protocol).

La carte comprend un premier module 22 qui lui même comporte un substrat diélectrique double-face 34; Sur une face se trouve la première interface de communication à contacts électriques 24 et sur la face opposée ladite seconde interface de communication 30.

Le film diélectrique 34 s'étend non seulement au dessus d'une cavité de réception 27 du microcircuit µP1 mais aussi au dessus de la cavité 26 de réception de l'objet portable, en la recouvrant de manière que la seconde interface 30 (ou une série de plots de contact d'interconnexion) soit disposée en regard de la cavité ou disposée dans le cas présent de manière à déboucher dans la cavité. A cet effet, le corps-support de la carte 20 comprend une large cavité 23 formant un premier plan P1 dont la profondeur correspond sensiblement à l'épaisseur du film support diélectrique 34.

L'objet portable ou second module de circuit intégré est contenu dans la cavité qui est dimensionnellement adaptée pour le contenir avec son interface. L'objet y est maintenu en place avec des moyens de fermeture de la cavité et/ou de maintien en position de connexion contre des plots de connexion 30 de la seconde interface. La cavité peut déboucher sur une face quelconque du support.

A la figure 5, selon un mode de réalisation, le support comporte des moyens de fermeture et/ou verrouillage de la cavité sous forme d'un ruban adhésif repositionnable 36 venant adhérer et occulter la face arrière 21 de la carte.

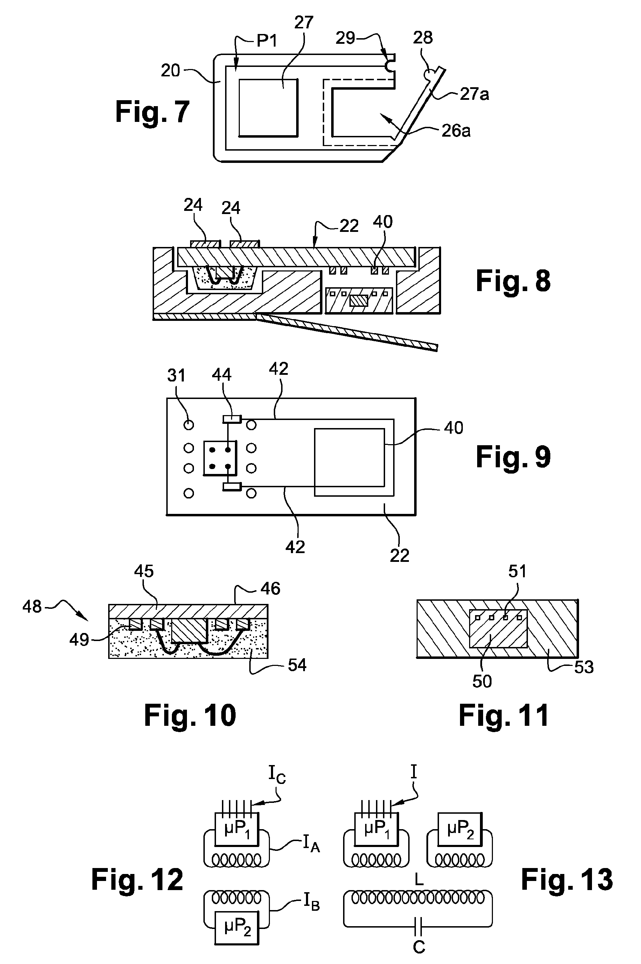

Aux figures 6, 6a et 7, la cavité 26a débouche sur la tranche 38 du support contrairement à la figure 5 où elle débouchait sur la face arrière 21 de la carte.

A la figure 7, le support comporte un autre moyen de fermeture et/ou verrouillage du dispositif en position de contact dans la cavité 26a. Ce moyen est un bras articulé 27a autour d'un axe disposé sur un angle du support et qui vient fermer la cavité sur la tranche de carte par rotation. Des moyens de verrouillage à l'extrémité du bras comportent une tête 28 qui s'encliquètent dans un oeillet ouvert 29 complémentaire disposé sur un côté du support.

A la figure 8, selon une autre variante de réalisation, la seconde interface de communication comprend une antenne 40 de type sans-contact. A cet effet, le premier circuit intégré µP1 est du type à double interface contact et antenne. Le circuit est apte à réaliser une fonction d'interface électronique pour transformer des signaux électriques et des signaux sans-contact, notamment électromagnétique. Eventuellement, d'autres modes de communications sans contact sont envisageables tel l'infra rouge, etc.

A la différence d'une carte à double interface contact / sans-contact de l'art antérieur, la carte de l'invention comporte une fonction lecteur pour le sans-contact. Dans la mise en oeuvre de cette fonction un champ radiofréquence est émis du circuit µP1 pour lire un circuit second µP2 agissant comme simple transpondeur radiofréquence, à priori non alimenté autrement que par le champ du lecteur. A priori, la carte selon l'invention n'est pas prévue, selon au moins un mode de réalisation, pour être lue par un lecteur externe.

Selon d'autres modes de réalisation, les cartes sans-contact du système peuvent être interrogées par un lecteur externe ou communiquer avec une borne externe, telle une borne d'accès, ou borne de paiement. Une antenne passive ou relais placée dans le terminal peut être mise en oeuvre le cas échéant pour amplifier le signal radiofréquence. Des moyens de sélection de l'application à mettre en oeuvre peuvent être compris par le système, notamment dans la carte applicative. Le cas échéant, plusieurs modules applicatifs sont compris dans le système, par exemple un module bancaire et/ou module transport et/ou module paiement; Dans un autre exemple, seul le module transport peut communiquer avec une borne.

Les communications entre les deux cartes ou modules sans-contact peuvent être réalisée par l'intermédiaire d'un lecteur conformément à la demande de brevet n° W003060820. Les modules se comportant comme deux transpondeurs lus à tour de rôle par le lecteur qui véhicule des données à échanger entre les deux transpondeurs.

Le module comporte un substrat diélectrique double-face portant une antenne 40 sur la face opposée aux plages de contacts électriques 24.

A la différence avec l'exemple de la figure 2, l'interface 30 (ou la série de contact d'interconnexion) est remplacée par une interface de type sans-contact radiofréquence. Et les puces électroniques sont aptes à réaliser chacune des fonctions d'interface électronique en rapport.

A la figure 9 le module 22 est représenté côté verso; la puce µP1 est connectée à une antenne 40 qui est située sur le film diélectrique isolant de manière à se retrouver dans le support en regard de la cavité de réception du composant contenant le second circuit µP2. Des pistes de liaison 42 et des extrémités d'interconnexion 44 relient l'antenne à la puce µP1. Cette puce µP1 a également des liaisons (non représentées) avec les plages de contact 24 notamment à travers des perforations 31 du film diélectrique.

A la figure 10 l'objet portable comporte un film diélectrique 45 portant l'antenne 49 et la puce connectée à l'antenne. Un enrobage 54 obtenu notamment par surmoulage enrobe la puce et ses connexions.

A la figure 11, l'antenne 51 peut être gravée ou intégrée sur la puce 50 elle-même. Un enrobage global 53 forme le corps de l'objet portable aux dimensions sensiblement de la cavité. Par exemple, le corps peut avoir un volume compris entre environ 3x3 mm et 10x10 mm avec une épaisseur comprise entre environ 0,3 à 0,7 mm.
La puce µP2 peut être disposée dans toute cavité ménagée au préalable dans le support de la carte.
Dans une variante de réalisation, la cavité est disposée sous le circuit µP1; L'accès peut s'effectuer en enlevant le module 22 amovible et repositionnable. L'avantage étant de réaliser une seule cavité et de simplifier la construction.

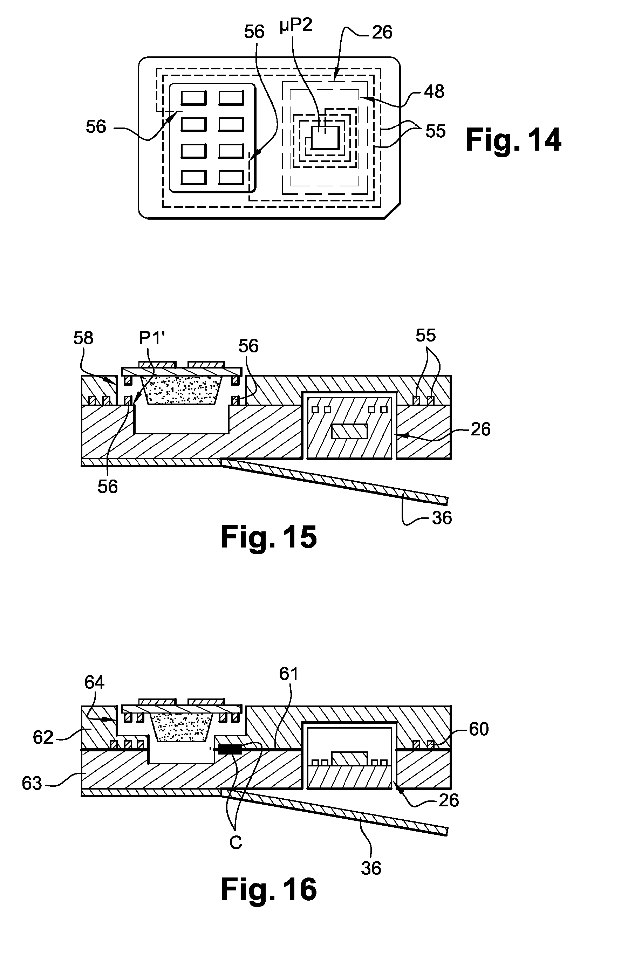

La figure 12 illustre un schéma de principe correspondant aux constructions des figures 8 et 15. Dans ces constructions, une puce avec une interface à contact IC et une interface à antenne IA est couplée avec un objet portable comportant une puce et une antenne IA. Le circuit intégré µP1 est du type "dual interface" tel que fourni par la société SAMSUNG sous la référence S3CC9GW.

Cette puce µP1 comporte une fonction de lecteur de la puce µP2 qui forme un transpondeur radiofréquence. L'énergie de couplage peut être obtenue notamment par les contacts électriques IC quand le système est placé dans l'appareil. Ces contacts IC correspondent aux plots de puce ou bornier de contacts ISO 7816.
La cavité et moyens de fermeture peuvent être ceux décrit à la figure 7 (accès sur champ et verrouillage par bras)

Pour le fonctionnement du système, le premier circuit µP1 est de préférence adapté pour se comporter comme circuit maître et l'autre µP2 comme esclave. De préférence, on met en oeuvre un interfaçage de type ISO avec le premier circuit. Ainsi, le composant additionnel µP2 notamment bancaire n'a pas besoin d'être adapté du moins de manière logicielle et au niveau de son protocole de communication par rapport aux cartes bancaires actuelles.

Le premier circuit µP1 comporte de préférence selon un mode de réalisation :
- un moyen logiciel de décodage et/ou de détection des commandes, données, messages destinées au premier circuit de manière à lui transmettre;
- un moyen physique pour piloter l'application, notamment bancaire (fonction de lecteur ISO ou RF);
- un moyen pour encapsuler les réponses du second circuit µP2 selon un autre format dans des messages (exemple du type SMS) à destination du serveur applicatif, notamment bancaire.
   Par ailleurs, le serveur applicatif notamment bancaire comporte comme la SIM des moyens pour extraire ou décoder les réponses des messages reçus du serveur de l'opérateur téléphonique.

La figure 13 illustre un autre mode de réalisation dans lequel les puces de la figure 12 sont couplées à l'aide d'une antenne relais LC. L'antenne relais n'est pas connectée au premier ni au second module mais elle est accordée en fréquence pour assurer un couplage optimal entre les deux circuits.

Aux figures 14 et 15, l'antenne est réalisée dans le support et connectée au premier circuit µP1 comme dans une carte de type combi-carte. L'antenne 55 s'étend dans le corps support de carte en entourant de préférence la seconde cavité 26 destinée à recevoir l'objet portable. L'antenne comprend des extrémités 56 susceptibles de connecter le module et la puce µP1 combi lorsque le module est inséré dans sa cavité 58. Ces extrémités ici débouchent dans le plan supérieur de la cavité P1'.

Le corps comprend ici, par exemple, deux feuilles ou couches laminées ensemble, la couche ou feuille inférieure portant l'antenne et la couche ou feuille supérieure une cavité. Un objet de type sans contact 48 comme celui de la figure 10 est placé dans la cavité 26. Le système est similaire à celui de la figure 8 sauf que le module 22 est plus réduit ainsi que la première cavité 23 du support; en outre, l'antenne 55 est logée dans le corps-support de carte au lieu d'être sur le film-support diélectrique.

Selon une variante de réalisation de la figure 16, on utilise le principe de la figure 13; La construction du système est identique à celle de la figure 14 sauf que l'antenne 55 remplacée par l'antenne relais 60 qui n'a plus de contact avec le circuit µP1 ou le module le comportant.

L'antenne relais est réalisée sur un autre film-support diélectrique 61 du type double-face ou une feuille ou un insert du corps de carte; le film porte les capacités d'accord en fréquence C sur chacune de ses faces. Le film 61 est ensuite laminé entre deux couches ou feuilles plastiques 62, 63. Les cavités 64, 26 sont réalisées par exemple par usinage et un film 36 ou feuille adhésive repositionnable 36 vient recouvrir la surface totale arrière de la carte comme précédemment.
L'antenne relais s'étend de préférence dans le support autour des deux cavités de manière à couvrir les champs électromagnétiques respectifs du premier module antenne et de celui de l'objet portable.

Le premier circuit est monté sur un module du type module/antenne. Il comporte un substrat diélectrique double-face portant une antenne sur la face opposée aux plages de contacts électriques.

Le dispositif ou objet portable associé 25 de son côté est apte à mettre en oeuvre une fonction applicative telle qu'une application bancaire, etc. Il comprend aussi comme précédemment les constituants essentiels logiciels pour communiquer ou être lu par le premier circuit. Il peut le cas échéant être lu par un lecteur ou borne externe.
Dans le cas d'une interface de type ISO avec µP1, il n'y a pas de modification de µP2 sauf le cas échéant modifications dimensionnelles.

Selon une alternative, les positions respectives des circuits intégrés µP1 et µP2 peuvent être interverties, même si c'est toujours le module SIM qui établit la communication téléphonique.

Ainsi, pour permettre une opération au moins de télécommunication, le circuit bancaire fixé à demeure dans la carte, par exemple, au format dimensionnel mini-SIM ou autre, doit être associé dés le début à un module SIM portable. L'échange de données d'identification de la SIM et/ou mobile, par exemple IMSI/Ki de la carte SIM pour l'identification et connexion au réseau, peut s'effectuer via le module applicatif.

Par exemple, à la mise sous tension de la carte SIM, le module applicatif peut demander à la SIM si elle a un message à afficher à l'utilisateur comme "taper code PIN" ou vérifier si un message de la SIM lui est parvenu sur une mémoire temporaire qu'elle consulte régulièrement ou dès la réception d'un message. Ce message est ensuite communiqué à l'appareil pour l'affichage ou autre. Lorsque l'utilisateur introduit son code, ce dernier est reçu par le module applicatif qui le transmet au module SIM et ainsi de suite.

Ce module SIM deviendrait un module applicatif de service de communication; il pourrait être à loger par exemple dans la cavité 26. Dans ce cas, les contacts du module SIM peuvent être redirigés vers l'interface ISO 24 directement. Mais on a vu précédemment qu'il est préférable de connecter le module SIM exclusivement au premier circuit et de passer par lui pour assurer notamment l'initialisation des communications avec le réseau.

En usage, le circuit applicatif dans le terminal qui serait un circuit maître, (avec ou sans le module SIM dans le système), permet à l'utilisateur d'effectuer des opérations locales applicatives notamment de paiement sans-contact ou de transport, d'accès, etc. en utilisant le terminal comme support.

Dans ce cas, ce serait l'entité applicative notamment bancaire ou de transport qui fournirait des cartes applicatives aptes à fonctionner avec toute carte SIM d'identification d'abonné choisie par l'utilisateur en toute indépendance avec l'entité émettrice de la carte applicative.

L'utilisateur peut même souhaiter utiliser son terminal uniquement pour les fonctions permises par des cartes applicatives, sans activer la fonction téléphonique ou sans que celle-ci soit présente ou en mesure de fonctionner. La carte applicative conforme à l'invention peut donc être au format de la carte SIM et prendre sa place dans le connecteur qui lui est réservé.

Le cas échéant, la communication du module SIM additionnel peut s'effectuer via le circuit bancaire qui devient transparent pour permettre au module SIM d'initier une communication sur le réseau. Dans ce cas, le module applicatif peut être un lecteur transparent du module SIM sans qu'il soit modifié (cas d'un interfaçage ISO)

On voit bien grâce à l'invention, que non seulement, il y indépendance entre le ou les module(s) applicatif(s) additionnel(s) et le module SIM, mais l'un comme l'autre peut être mis en avant commercialement par les entités concernées ou fonctionnellement selon l'usage que privilégie l'utilisateur.

Comme décrit à des variantes de réalisation ou mise en oeuvre, l'objet portable reçoit différents conditionnements et/ou fonctions. Il peut être soit un module à contacts, un module à antenne ou simplement une puce à antenne. Le cas échéant, l'objet portable n'est pas placé dans la cavité mais est logé en dehors, par exemple dans une montre, un portefeuille, un sac et l'utilisateur rapproche du système l'objet portable ayant une fonction sans-contact radiofréquence pour réaliser une transaction bancaire tandis sue la communication téléphonique est établie.

Selon un mode de réalisation, les différents circuits µP1, µP2 voire plus, communiquent ensemble par moyen sans-contact, notamment par le biais d'une antenne située dans l'appareil, par exemple dans une coque.
L'antenne peut venir se connecter à des contacts notamment type C4, C8 d'un module applicatif ou SIM.

Pour améliorer la sécurité, on peut prévoir une session d'authentification de l'objet portable préalable qui autorise la carte applicative (ex. bancaire) à dialoguer avec la SIM. De même un canal sécurisé, chiffré peut être établi entre les deux.

Cela résout un problème de vol d'information d'une carte sans contact à l'insu du porteur.

Par ailleurs, l'appareil ou terminal peut être constitué par tout lecteur communicant ou non susceptible de lire le système tel qu'un assistant personnel (PDA), calculatrice, téléphone, clé USB, etc. Bien que décrit en relation avec une infrastructure (réseau de télécommunication, serveur bancaire, terminal, pour effectuer des transactions / opérations à distance, le système trouve une utilisation en local, par exemple, pour mettre en oeuvre une application voire un jeu électronique, une vidéo d'une carte additionnelle. De même, est envisagé toute sorte de réseau de communication à distance, téléphonique, internet, etc.

Le cas échéant, le module SIM est également portable (amovible par rapport à un support carte adaptateur et de forme définitive dans le sens où il ne doit pas être encarté par collage comme un module classique dans un corps de carte) et/ou standardisé; le support comporte deux cavités (ou une grande) susceptibles de recevoir le module SIM en tant qu'objet portable également, par exemple de type 3G, mini-UICC et l'objet portable additionnel ayant, le cas échéant, un format plus petit encore que le module SIM. Le support devient simplement un élément de jonction de deux circuits intégrés indépendants et rassemblés ensemble dans un adaptateur ayant un format standard compatible avec un appareil.

L'adaptateur peut éventuellement être un corps de carte ayant un format compatible avec l'appareil de communication et étant muni de moyen de réception des deux modules ou circuits portables ou du moins l'un des deux étant portable et amovible. Le corps de l'adaptateur peut comprendre des interfaces de communication vis à vis des modules et/ou de l'extérieur (terminal d'accueil ou borne).

L'adaptateur peut avoir en particulier un format standard choisi parmi celui des mémoires flash de type SD, mini SD, micro SD, ou tout type de carte multimédia (MMC) ou de carte de type "Memory Stick".

## Revendications

1. Système à double circuit intégré pour terminal de communication, ledit système comprenant :
- une carte à puce de circuit intégré comprenant un support (20),
- un premier circuit intégré (µP1) dans le support et une première interface de communication du circuit intégré (24), ledit premier circuit étant adapté pour communiquer avec l'appareil;
- un second circuit intégré (µP2) portable comportant une troisième interface de communication (48, 49, 51) / d'interconnexion (28),
**caractérisé en ce que** le premier circuit intégré (µP1) comporte une seconde interface de communication (40, 55) / d'interconnexion (30) couplée / en contact avec ladite troisième interface (48, 49, 51, 28) du second circuit intégré portable.

2. Système selon la revendication 1, **caractérisé en ce qu'**il comprend une cavité (26, 26a) aux dimensions d'un objet portable (25, 48) comprenant le second circuit intégré (µP2), le second objet portable étant compris dedans avec son interface (25, 49, 51).

3. Système selon la revendication 2, **caractérisé en ce que** ladite seconde interface de communication / d'interconnexion comprend des contacts électriques (30) débouchant dans la cavité et reliés au premier circuit intégré (µP1) par des pistes d'interconnexion (32).

4. Système selon l'une des revendications précédentes, **caractérisé en ce que** ladite seconde interface de communication / d'interconnexion comprend une antenne radiofréquence (40, 55).

5. Système selon l'une des revendications précédentes, **caractérisé en ce que** le premier circuit intégré (µP1) est monté dans un module (22) comportant un substrat diélectrique double-face (34), ledit substrat portant sur une face ladite première interface de communication à contacts électriques (24) et sur la face opposée ladite seconde interface de communication/d'interconnexion (30).

6. Système selon l'une des revendications 2 à 5, **caractérisé en ce que** le substrat diélectrique (34) s'étend sur ladite cavité (26), la seconde interface (30) étant en regard de la cavité.

7. Système selon l'une des revendications 2 à 6, **caractérisé en ce que** le support comporte des moyens (26) de fermeture de la cavité par ruban adhésif repositionnable.

8. Système selon l'une des revendications 2 à 7, **caractérisé en ce que** la cavité (26a) débouche sur la tranche du support (20).

9. Système selon l'une des revendications 2 à 8, **caractérisé en ce que** la cavité comporte un moyen de verrouillage du dispositif en position de contact.

10. Système selon l'une des revendications précédentes, **caractérisé en ce que** le premier circuit (µP1) est monté sur un module du type module/antenne, comportant un substrat diélectrique double-face portant une antenne sur la face opposée aux plages de contacts électriques (24).

11. Système selon la revendication 1, **caractérisé en ce que** l'antenne (55) est réalisée dans le support et connectée au premier module (µP1).

12. Système selon l'une des revendications 1 ou 11, **caractérisé en ce que** l'antenne (55) entoure la cavité (26) de réception du dispositif.

13. Système selon l'une des revendications précédentes, **caractérisé en ce qu'**il comprend une antenne relais (60, LC) entre la première (40) et seconde (49, 51) interface de communication à antenne.

14. Système selon l'une des revendications précédentes, **caractérisé en ce que** le second circuit intégré (µP2) est compris parmi un module à contacts électriques (25), un module à antenne (48), une puce à antenne.

15. Système selon l'une des revendications précédentes, **caractérisé en ce que** la carte (20) a un format standard.

16. Carte à puce de circuit intégré pour appareil de communication, ladite carte comprenant :
- un premier circuit intégré (µP1) comportant une première interface de communication (24)/interconnexion, ledit premier circuit étant adapté pour communiquer avec l'appareil,
**caractérisée en ce que** ledit premier circuit intégré (µP1) comporte une seconde interface de communication / interconnexion (30, 40, 55) apte à être couplée / en contact avec un second circuit intégré portable.

17. Carte à puce selon la revendication précédente, **caractérisée en ce qu'**elle comprend une cavité (26) destinée à recevoir ledit second circuit intégré (µP2).

18. Carte à puce selon l'une des revendications 16 ou 17, **caractérisée en ce qu'**elle est une carte d'identification d'abonné avec un format standard.

19. Adaptateur ayant un format carte, pour appareil de communication, ledit adaptateur comportant un corps support au format carte, **caractérisé en ce que** ledit corps-support est apte à rassembler, à l'intérieur du format, deux circuits intégrés respectivement premier µP1 et second µP2, l'un au moins étant portable et/ou amovible.

20. Adaptateur selon la revendication 19, **caractérisé en ce que** le format de l'adaptateur est un format standard choisi parmi celui des mémoires flash de type SD, Mini SD, Micro SD, ou tout type de carte multimédia MMC ou de carte de type Memory Stick.

21. Utilisation du système selon l'une des revendications 1 à 15 pour mettre en oeuvre une application dans un terminal, l'application étant contenue au moins en partie dans un second circuit intégré µP2.

22. Procédé pour mettre en oeuvre une application via une communication établie par un terminal à l'aide d'une carte d'identification d'abonné (SIM), l'application étant contenue dans un circuit intégré additionnel portable (µP2),
**caractérisé en ce que** le procédé prévoit d'équiper la carte à puce de seconds moyens d'interconnexion ou de couplage (30, 40, 55, 60) avec ledit circuit additionnel portable (µP2),
et on met en oeuvre l'application en établissant un contact ou couplage entre la carte à puce (SIM) et le circuit intégré additionnel à l'aide de ces seconds moyens d'interconnexion ou de couplage (30, 40, 55, 60).
